# EUROPEAN PATENT APPLICATION

(11) **EP 4 032 632 A1**
(43) Date of publication of application: **27.07.2022**
(21) Application number: 20864714.9
(22) Date of filing: 08.09.2020
(51) Int. Cl.: B21D 39/00, F16B 37/04

(54) **METHOD FOR ATTACHING SWAGE NUT, AND SWAGING TOOL**

(30) Priority: 19.09.2019 JP 2019170687
(71) Applicant: Press Kogyo Co., Ltd., Kawasaki-shi, Kanagawa 210-8512 (JP)
(72) Inventor: KONDO, Shigeki, Fujisawa-shi, Kanagawa 252-0816 (JP)
(74) Representative: Schaumburg und Partner Patentanwälte mbB
(86) International application number: PCT/JP2020/033986
(87) International publication number: WO 2021/054206

(57) **Abstract**

An attaching method for a crimp nut is provided that is capable of expanding a range of length of a crimp portion that is appropriate for a plate thickness dimension of a plate to be attached. The attaching method for the crimp nut comprising a first step S01 of inserting the crimp portion 5 into the pilot hole 4, a second step S02 of inserting a pin 13 for preventing deformation into the crimp portion 5, and a third step S03 of pressing the nut portion 2 and the crimp portion 5 in the axial direction to compress the crimp portion 5 and pushing a tip of the crimp portion 5 into the pilot hole 4.

## Description

### Technical Field

The present disclosure relates to an attaching method and a crimp tool for crimping and attaching a crimp nut to a plate to be attached.

### Background Art

When a nut is attached to a plate formed by a middle or large thickness plate, the nut is generally attached by welding.

When welding the nut to the plate to be attached, a male screw of a set tool is screwed into a female screw of the nut, the nut is fixed to the plate to be attached, and then a part of the contact portion between the nut and the plate to be attached is welded.

Further, as a crimp nut attached to an end of a bolt hole, one described in Patent Literature (PTL) 1 is known. This crimp nut has a crimp portion that projects axially from an edge portion of a female screw hole. The crimp portion has an inner diameter smaller than that of the female screw hole, and is forcibly pushed outward and expanded by a bolt-shaped crimp rod inserted.

Furthermore, a press-fit nut described in Patent Literature 2 has a nut fixing portion to be inserted into an attachment hole of the panel. The nut fixing portion has a step portion, a groove portion, and an insertion portion in this order from the top. Screws are formed on the side surfaces of the step portion and the insertion portion. When the insertion portion is inserted into the attachment hole, the insertion portion deforms the side surface portion of the attachment hole, and the deformed material is inserted between the screws. The step portion allows the material of the side surface of the attachment hole to enter the groove portion.

### Citation List

### Patent Literature

[PTL 1] JPH10-252733
[PTL 2] JP2013-113396
[PTL 3] JP2019-056402

### SUMMARY

### Technical Problem

By the way, a method of welding a nut to a plate to be attached has following problems.
1. The female screw portion of the nut is deformed by the heat during welding.
2. Due to thermal expansion of the female screw portion of the nut, the male screw portion of the set tool and the female screw portion of the nut are crimped.
3. Spatter generated when welding other nut adheres to the female screw portion of the nut from which the set tool has been removed.
4. Capital investment for fume collectors or the like is required.
5. Cost for welding wire, CO2 gas, etc. is incurred.
6. It is necessary to manage welding wires, CO2 gas, etc. so as not to run out.

On the other hand, the crimp nut described in Patent Literature 1 and the press-fit nut described in Patent Literature 2 can solve the above-mentioned problems associated with welding since they do not use welding.

However, in the crimp nut described in Patent Literature 1, a base portion of the crimp portion is pushed and bent, and the bent point is weak. Therefore, the crimp nut described in Patent Literature 1 has a drawback that the base portion of the crimp portion is easily damaged when a high torque is applied to the nut after attached.

Further, the press-fit nut described in Patent Literature 2 is attached simply by press-fit. Therefore, the press-fit nut described in Patent Literature 2 has a drawback that the nut after attached is easily loosened when a high torque is applied.

Therefore, according to a crimp nut, a crimp tool for a crimp nut, and an attaching method for a crimp nut described in Patent Literature 3, these problems can be solved.

However, the crimp tool described in Patent Literature 3 compresses the crimp portion of the crimp nut in the axial direction so that the tip surface thereof is flush with the plate to be attached. For this reason, there is a problem that a range of length of the crimp portion that is appropriate for a plate thickness dimension of the plate to be attached is narrow, and even if the nut portion of the crimp nut has the same size, a dedicated crimp nut is required for each plate thickness of the plate to be attached.

Therefore, the present invention was conceived in view of such circumstances, and an object of the present invention is to provide an attaching method and a crimp tool for a crimp nut capable of expanding a range of length of a crimp portion that is appropriate for a plate thickness dimension of a plate to be attached.

### Solution to Problem

According to one aspect of the present invention, an attaching method for attaching a crimp nut to a pilot hole of a plate to be attached is provided, the crimp nut comprising: a nut portion having a screw hole; and a cylindrical crimp portion extending in an axial direction from the nut portion, the attaching method comprising: a first step of inserting the crimp portion into the pilot hole; a second step of inserting a pin for preventing deformation into the crimp portion; and a third step of pressing the nut portion and the crimp portion in the axial direction to compress the crimp portion and pushing a tip of the crimp portion into the pilot hole.

Further, according to one aspect of the present invention, a crimp tool for attaching a crimp nut to a pilot hole of a plate to be attached is provided, the crimp nut comprising: a nut portion having a screw hole; and a cylindrical crimp portion extending in an axial direction from the nut portion, the crimp tool comprising: a crimp side pressing portion to be contacted with a tip of the crimp portion; a nut side pressing portion to be contacted with an end surface of the nut portion on a side opposite to the crimp portion; a pin inserted into the crimp portion to regulate radially inward deformation of the crimp portion ; and a tool body for holding the crimp side pressing portion and the nut side pressing portion in an opposing manner and relatively approaching them to or separating them from each other, wherein the crimp side pressing portion has a pushing portion that can be inserted into the pilot hole.

Preferably, the nut side pressing portion includes a high seat portion that is contacted with the plate to be attached.

Preferably, the pushing portion is formed in a cylindrical shape.

Preferably, an outer diameter of the pushing portion is set smaller than an inner diameter of the pilot hole, and the crimp side pressing portion on a base end side of the pressing portion is formed with a gradual change portion whose diameter increases toward the proximal end side.

Preferably, the crimp tool further comprises a peeling mechanism for urging the pin in a direction of pulling out from the crimp portion.

According to the present invention, it is possible to provide an attaching method for a crimp nut and a crimp tool capable of expanding a range of length of a crimp portion that is appropriate for a plate thickness dimension of a plate to be attached.

### BRIEF DESCRIPTION OF THE DRAWINGS

FIG. 1 is a side view of a crimp nut according to one embodiment of the present invention;
FIG. 2 is a view taken along the line A-A in FIG. 1;
FIG. 3 is a schematic side view of a crimp tool for a crimp nut;
FIG. 4 is a side view of a state where a crimp part of the crimp nut is inserted into a piercing hole of the plate to be attached from a shear surface side;
FIG. 5 is a side sectional view of a state where the crimp nut is set in a crimp tool for the crimp nut;
FIG. 6 is a side sectional view of the crimp nut which has been crimped and deformed;
FIG. 7 is a side view of the crimp nut attached to the plate to be attached; and
FIG. 8 is a flowchart of an attaching method for the crimp nut.

### DESCRIPTION OF THE EXAMPLE EMBODIMENTS

Hereinafter, embodiments of the present invention will be described with reference to the accompanying drawings.

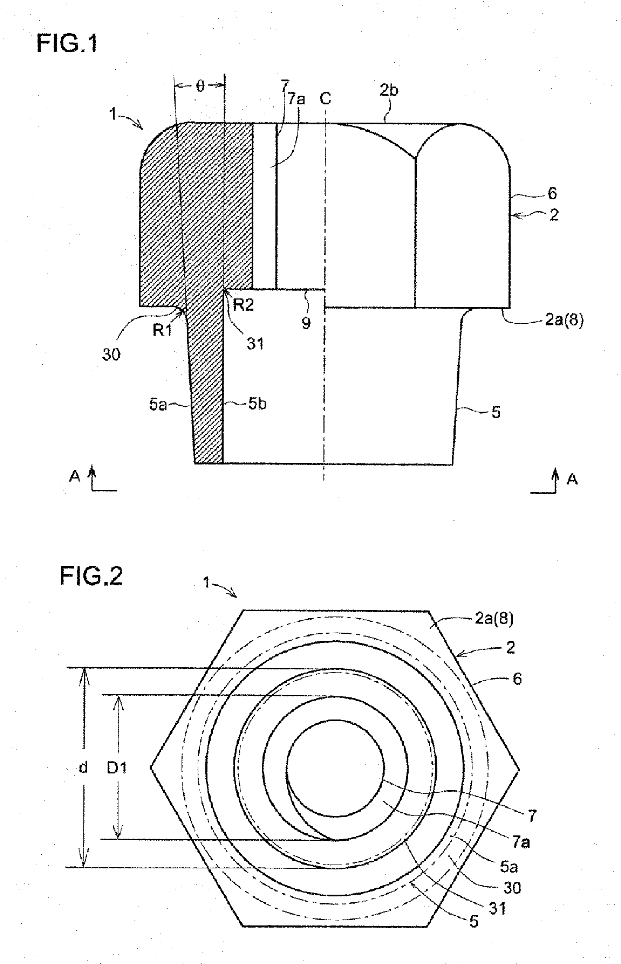

FIG. 1 is a side view of a crimp nut which is an object of an attaching method and a crimp tool according to the present embodiment. The alternate long and short dash line in the figure is a central axis C, and a left side of the central axis C shows a cross section of the crimp nut. FIG. 2 is a view taken along the line A-A of FIG. 1 when the crimp nut is viewed from a crimp portion side.

As shown in FIGS. 1, 2 and 4, a crimp nut 1 includes a nut portion 2 and a crimp portion 5. The crimp portion 5 is formed to extend axially from one end surface 2a in the axial direction of the nut portion 2 and is inserted into a pilot or preparatory hole 4 of a plate to be the attached 3.

The nut portion 2 is formed in substantially the same shape as the hexagon nut. Specifically, the nut portion 2 includes a nut main body portion 6 formed in a hexagonal cylinder shape, and a screw hole 7 formed coaxially with the nut main body portion 6. A female screw 7a is formed on an inner peripheral surface of the screw hole 7. Further, on the crimp portion 5 side of the nut portion 2, an outer peripheral side end surface 8 located on the outer peripheral side of the crimp portion 5 is formed, and an inner peripheral side end surface 9 located on the inner peripheral side of the crimp portion 5 is formed. The outer peripheral side end surface 8 constitutes a seating surface to be seated on an attaching surface 3a of the plate to be attached 3.

The crimp portion 5 is formed in a cylindrical shape, and extends from the outer peripheral side end surface 8 and the inner peripheral side end surface 9 of the nut portion 2 in the axial direction of the central axis C. Further, the crimp portion 5 is formed in a tapered shape whose outer circumference is reduced in diameter toward a tip end. An inclination angle θ of the outer peripheral surface with respect to the axial direction of the central axis C may be within a range of approximately 1° or more and 7° or less. It should be noted that each of the above numerical values is merely an example and can be changed as appropriate.

The tip end of the crimp portion 5 is formed to have a diameter smaller than a diameter ϕ of the narrowest portion of the pilot hole 4. An inner diameter d of the crimp portion 5 is formed to be constant over the entire length, and is formed to be larger than a valley diameter D1 of the female screw 7a. Further, an axial length a of the crimp portion 5 is formed longer than an axial length b of the pilot hole 4. When the crimp portion 5 is crimped in the axial direction until it has the same length b as the pilot hole 4 or a length shorter than the pilot hole 4, the crimp portion 5 is crimped to an inner peripheral surface 25 of the pilot hole 4.

On a base end portion of the crimp portion 5, an outer rounded portion 30 having an arcuate cross section is formed to connect an outer peripheral surface 5a of the crimp portion 5 and the outer peripheral side end surface 8. Further, on the base end portion of the crimp portion 5, an inner rounded portion 31 having an arcuate cross section is formed to connect an inner peripheral surface 5b of the crimp portion 5 and the inner peripheral side end surface 9. A radius R1 of the outer rounded portion 30 is set to be larger than a radius R2 of the inner rounded portion 31. Specifically, if the radius R2 of the inner rounded portion 31 is in the range of 0.1 mm or more and 0.5 mm or less, the radius R1 of the outer rounded portion 30 is set to be larger than the radius R2 by 0.3 mm to 1.0 mm.

As a result, it is possible to restrain the axial crimp force applied to the crimp portion 5 from transmitting or flowing inward in the radial direction in the nut portion 2, and to prevent or restrain deformation of the screw hole 7.

The nut portion 2 and the crimp portion 5 are made of rolled steel for general structure. The nut portion 2 and the crimp portion 5 may be formed of other materials generally used for hexagon nut, and may be formed of, for example, a carbon steel material for machine structure, a stainless steel material, or the like.

Further, the plate to be attached 3 is made of a flat steel material. The plate to be attached 3 may be any other plate as long as it has an attaching surface on which the outer peripheral side end surface 8 of the crimp nut 1 is seated. For example, the plate 3 may be made of a channel material used for a chassis frame of a vehicle or the like. Further, material of the plate to be attached 3 is not limited to iron, and may be a resin or a non-ferrous metal.

Next, a crimp tool for attaching the crimp nut 1 to the plate to be attached 3 will be described. For convenience of explanation, the positional relationship of various members in the crimp tool will be described with reference to the crimp nut 1 as an object of processing. For example, in various members extending in the axial direction of the crimp nut 1, an end on the crimp nut 1 side is a tip end, and an end on the side opposite to the crimp nut 1 is a base end.

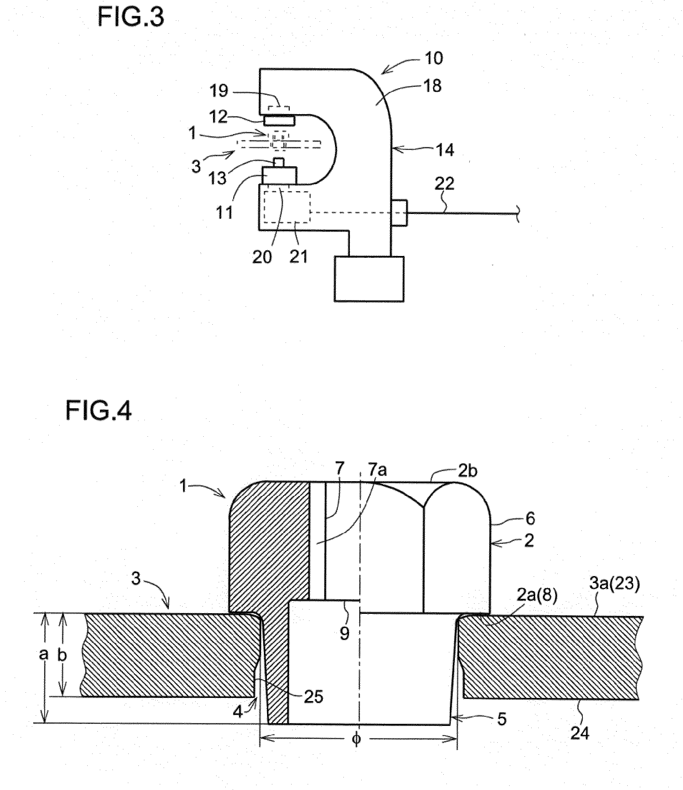

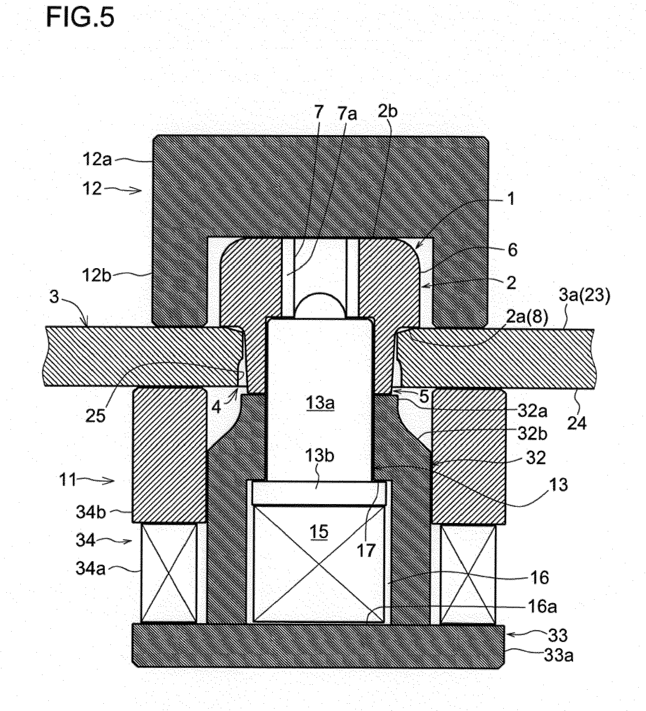

As shown in FIGS. 3 and 5, the crimp tool 10 includes a crimp side pressing portion 11 to be contacted with a tip of the crimp portion 5 of the crimp nut 1, a nut side pressing portion 12 to be contacted with an end surface 2b of the nut portion 2 on the side opposite to the crimp portion 5, a pin 13 inserted into the crimp portion 5 to regulate radially inward deformation of the crimp portion 5, and a tool body 14 for holding the crimp side pressing portion 11 and the nut side pressing portion 12 in an opposing manner and relatively approaching them to or separating them from each other.

The crimp side pressing portion 11 includes a punch portion 32 formed in a cylindrical shape and pressing the crimp nut 1 by its tip, a flange portion 33 provided at a base end of the punch portion 32, and a peeling mechanism 34 provided on the flange portion 33.

In the punch portion 32, an accommodating hole 16 is formed for accommodating the pin 13 in protruding and retracting manner, and a spring 15. The accommodating hole 16 is formed to have a circular cross section and is formed coaxially with the punch portion 32. The spring 15 urges the pin 13 toward the tip end.

Further, an engaging portion 17 is formed in the punch portion 32 for restricting the movement of the pin 13 in the tip direction. The engaging portion 17 is formed by projecting the punch portion 32 facing an opening of the accommodating hole 16 into the accommodating hole 16 so as to reduce a diameter of the opening of the accommodating hole 16.

The flange portion 33 is formed in a plate shape and has a protruding portion 33a protruding outward in the radial direction from the punch portion 32.

The peeling mechanism 34 includes a peeling spring 34a arranged on the outer periphery of the punch portion 32 and expanding and contracting in the axial direction, and a contact portion 34b provided at the tip of the peeling spring 34a for contacting with the plate to be attached 3. The peeling spring 34a is composed of a coil spring and is coaxially arranged on the outer circumference of the punch portion 32. The peeling spring 34a is restricted from moving in the axial direction by contacting its base end to the protruding portion 33a. The contact portion 34b is formed in a cylindrical shape and is provided at the tip of the peeling spring 34a. The contact portion 34b is coaxially arranged on the outer circumference of the punch portion 32. Further, the contact portion 34b is contacted with the outer peripheral surface of the punch portion 32 slidably in the axial direction.

The pin 13 is provided in the accommodating hole 16 so as to freely protrude and retract in the axial direction. The pin 13 includes an insertion portion 13a formed in a substantially columnar shape, and an engaged portion 13b provided at the base end of the insertion portion 13a and engaged to the engaging portion 17.

The insertion portion 13a has its base end inserted into the accommodating hole 16 and its tip end protruding out of the accommodating hole 16. The outer periphery of the tip portion of the insertion portion 13a is formed by rounding the corners. As a result, the pin 13 can be easily inserted into the crimp portion 5, and the pin 13 can be easily pulled out from the crimp portion 5 after crimp. Further, the tip end of the insertion portion 13a may be formed in a spherical shape. As a result, when the insertion portion 13a is inserted into the screw hole 7 of the crimp nut 1, the insertion portion 13a can be automatically aligned so as to be aligned with the center of the screw hole 7. The tip end of the insertion portion 13a may be formed in a flat shape facing the inner peripheral side end surface 9. Further, the base end side of the insertion portion 13a is formed so as to be in sliding contact with the inner peripheral surface of the engaging portion 17. As a result, the insertion portion 13a is restricted from moving in the radial direction by the engaging portion 17, and is accurately guided in the axial direction.

The engaged portion 13b is formed so as to project radially outward from the insertion portion 13a. Further, the engaged portion 13b is formed so as to be in sliding contact with the inner peripheral surface of the accommodating hole 16. As a result, the engaged portion 13b is restricted from moving in the radial direction and is accurately guided in the axial direction. The pin 13 may be surface-treated to prevent crimping or adhesion to the crimp portion 5. Specifically, the surface treatment may be performed by a physical vapor deposition method or a chemical vapor deposition method. In this case, the film formed by the surface treatment may be made of material having high slidability and hardness such as titanium nitride and chromium nitride.

The spring 15 is composed of a coil spring. The spring 15 is provided between the bottom surface 16a of the accommodating hole 16 and the pin 13. The spring 15 urges the pin 13 toward the tip end. As a result, the tip of the pin 13 is projected from the accommodating hole 16. The spring 15 is not limited to the coil spring. For example, the spring 15 may be an air spring or another type of spring.

The nut side pressing portion 12 includes a pressing portion main body portion 12a formed in a columnar shape having a diameter larger than that of the nut portion 2, and a high seat portion 12b formed extending axially from the outer peripheral portion of the pressing portion main body portion 12a. Details of the high seat portion 12b will be described later.

The tool body 14 includes an arm portion 18 formed in a substantially C shape, a fixed side holding portion 19 provided on an inner peripheral side of the arm portion 18 to hold the nut side pressing portion 12, a movable side holding portion 20 provided on the inner peripheral side of the arm portion 18 to hold the crimp side pressing portion 11 so as to freely protrude and retract, and a driving portion 21 provided on the arm portion 18 for driving the movable side holding portion 20.

The fixed side holding portion 19 is composed of a chuck, and holds the nut side pressing portions 12 having a plurality of sizes in a detachable manner.

The movable side holding portion 20 is composed of a chuck, and holds the flange portions 33 of the crimp side pressing portions 11 having a plurality of sizes in a detachable manner. Further, the movable side holding portion 20 is arranged so as to face the fixed side holding portion 19.

The driving portion 21 drives the movable side holding portion 20 in a direction in which the movable side holding portion 20 is approached to or separated from the fixed side holding portion19. Further, the driving portion 21 has a function of detecting a reaction force when the movable side holding portion 20 is driven toward the fixed side holding portion19, and a function of reversing the driving direction of the movable side holding portion 20 when the reaction force larger than a preset threshold value is detected. Here, the threshold value is, for example, set equal to the reaction force when the crimp side pressing portion 11 comes into contact with the plate to be attached 3. The value of this reaction force is obtained in advance by calculation or experiment, and is set in the driving portion 21. That is, the driving portion 21 sequentially detects the reaction force when the crimp nut 1 is crimped, and when the detected reaction force increases at or above the preset threshold value, the driving portion 21 reverses the drive direction of the movable side holding portion 20 to separate it from the fixed side holding portion 19.

Further, the tool body 14 is suspended by a balancer, a hoist, or the like (not shown), and can be freely moved to the position of the pilot hole 4 of the plate to be attached 3. A power cord 22 is connected to the tool body 14. The power cord 22 supplies power to the driving portion 21. The driving portion 21 is not limited to an electric type. For example, it may be a hydraulic type driven by hydraulic pressure, or may be driven by another method.

By the way, in a crimp tool described in Patent Literature 3 (not shown), the crimp portion of the crimp nut is compressed in the axial direction so that the tip surface thereof is flush with the plate to be attached. For this reason, the length of the crimp portion that fits the plate to be attached 3 is uniquely determined according to the plate thickness dimension of the plate to be attached 3, and a range of length of the crimp portion that is appropriate for a plate thickness dimension of the plate to be attached 3 is very narrow. Therefore, even if the nut portion of the crimp nut has the same size, a dedicated crimp nut is required for each plate thickness of the plate to be attached 3.

If the crimp portion is longer than the appropriate length (appropriate length for the plate thickness of the plate to be attached 3), it may cause deformation of the screw of the nut portion, broken screw pitch, uneven end surface of the crimp portion, and loosening of the fastening screw after fastening the other parts.

Further, if the crimp portion is shorter than the appropriate length, it may cause insufficient torque to resist idling.

Therefore, when used for production, many types of crimp nuts are required, and a crimp nut having an appropriate length of the crimp portion according to the plate thickness of the plate to be attached 3 must be accurately selected and used.

Therefore, in the present embodiment, the punch portion 32 of the crimp side pressing portion 11 has a pushing portion 32a that can be inserted into the pilot hole 4. The pushing portion 32a is formed at the tip end portion of the punch portion 32, and is formed in a cylindrical shape that can be inserted into the pilot hole 4.

An outer diameter (diameter) of the pushing portion 32a is set smaller than an inner diameter (diameter) of the pilot hole 4. The inner diameter (diameter) of the pushing portion 32a is set to be substantially the same as the outer diameter (diameter) of the inserting portion 13a of the pin 13.

Further, the punch portion 32 on the base end side of the pushing portion 32a is formed with a gradual change portion 32b whose diameter increases toward the proximal end side. Since the pushing portion 32a has a small diameter, the compressive stress applied to the pushing portion 32a is very high. Therefore, by providing the gradual change portion 32b, the compressive stress can be dispersed, and buckling of the punch portion 32 can be prevented or restrained.

Further, in case that the crimp tool described in Patent Literature 3 is used, when an axial crimp force is applied to the crimp portion 5, the nut portion 2 may also be compressed in the axial direction due to the reaction force and may be deformed.

Therefore, the nut side pressing portion 12 of the present embodiment includes a high seat portion 12b that is contacted with the plate to be attached 3. Therefore, the crimp force applied to the nut portion 2 can be dispersed to the high seat portion 12b, and the deformation of the nut portion 2 and the collapse of the screw pitch can be prevented or restrained. Specifically, the high seat portion 12b is formed in a cylindrical shape extending in the axial direction from the outer peripheral portion of the pressing portion main body portion 12a. As a result, the crimp force applied to the nut portion 2 can be evenly distributed in the circumferential direction. The height dimension (axial dimension) of the high seat portion 12b is set to be the same as the height dimension (axial dimension) of the nut portion 2.

Further, the high seat portion 12b is formed in a size (inner diameter) capable of accommodating the nut portion 2 inside. The high seat portion 12b is formed in a cylindrical shape, but is not limited to this. For example, the high seat portion 12b may be formed in a columnar shape extending in the axial direction. In this case, a plurality of high seat portions 12b may be arranged at equal intervals in the circumferential direction. The crimp force applied to the nut portion 2 can be evenly distributed in the circumferential direction.

Next, attaching method for the crimp nut 1 will be described.

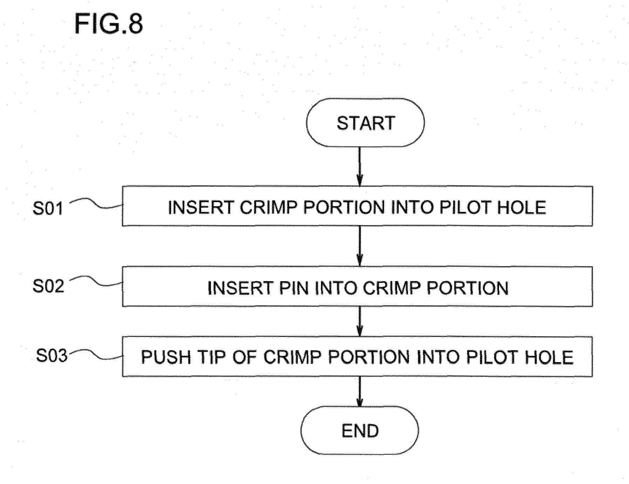

As shown in FIG. 8, attaching method for the crimp nut 1 includes a first step (step S01) of inserting the crimp portion 5 into the pilot hole 4, a second step (step S02) of inserting the pin 13 for preventing deformation into the crimp portion 5, and a third step (step S03) of pressing the nut portion 2 and the crimp portion 5 in the axial direction to compress the crimp portion 5 and pushing the tip of the crimp portion 5 into the pilot hole 4.

Prior to the first step, a pilot hole 4 (pierced hole) is formed in the plate to be attached 3 by piercing or the like using a press machine or the like. In this time, on the surface side (shear surface 23 side) facing the punch for piercing (not shown), sagging (a phenomenon in which the hole edge is dented over the entire circumference) occurs at the hole edge. Further, the hole diameter is enlarged on the surface side (the fracture surface 24 side) from which the punch comes out after penetrating the plate to be attached 3.

As shown in FIG. 4, in the first step (step S01), the crimp portion 5 of the crimp nut 1 is inserted into the pilot hole 4 of the plate to be attached 3 from the shear surface 23 side. The crimp portion 5 may be inserted from the fracture surface 24 side of the pilot hole 4.

When the crimp portion 5 is inserted into the pilot hole 4, the outer peripheral side end surface 8 of the nut portion 2 comes into contact with the shear surface 23 which is the attaching surface 3a of the plate to be attached 3. As a result, an axial position of the crimp nut 1 with respect to the plate to be attached 3 is determined. At this time, the tip of the crimp portion 5 penetrates the pilot hole 4 and protrudes from the pilot hole 4. Further, a gap is formed over the entire circumference between the inner peripheral surface 25 on the fracture surface 24 side of the pilot hole 4 and the crimp portion 5.

After that, the second step (step S02) is performed. In the second step, the crimp tool 10 is used. The nut side pressing portion 12 and the crimp side pressing portion 11 are attached to the tool body 14 in advance.

As shown in FIG. 5, the crimp tool 10 is set with the crimp nut 1 inserted into the pilot hole 4. Specifically, the crimp nut 1 is inserted between the nut side pressing portion 12 and the crimp side pressing portion 11, and the nut portion 2 is positioned in the high seat portion 12b. After that, the tool body 14 is driven to bring the crimp side pressing portion 11 closer to the crimp portion 5. As a result, the pin 13 is inserted into the crimp portion 5, and the pushing portion 32a is brought into contact with the crimp portion 5. At this time, the contact portion 34b of the peeling mechanism 34 is brought into contact with the plate to be attached 3, and the peeling spring 34a is compressed in the axial direction.

After that, the third step (step S03) is performed. In the third step, the tool body 14 is driven to bring the crimp side pressing portion 11 closer to the nut side pressing portion 12. As a result, the crimp nut 1 is compressed in the axial direction by the crimp side pressing portion 11 and the nut side pressing portion 12, and is crimped. At this time, the crimp portion 5 buckles and deforms so as to expand the diameter of the base end portion while being crushed in the axial direction. As a result, the diameter-expanded base end portion is firmly crimped to the plate to be attached 3 constituting the inner peripheral surface 25 of the pilot hole 4, and deformation in the diameter-expanding direction is restricted. At this time, the plate to be attached 3 is hardly deformed. Further, when the crimp nut 1 is compressed in the axial direction and crimped, the crimp force also acts on the nut portion 2. However, not only the nut portion 2 but also the high seat portion 12b contact with the plate to be attached 3. Therefore, the crimp force is also distributed to the high seat portion 12b, and the deformation of the nut portion 21 is prevented or restrained.

Then, the occurrence of screw deformation and screw pitch collapse is prevented or restrained.

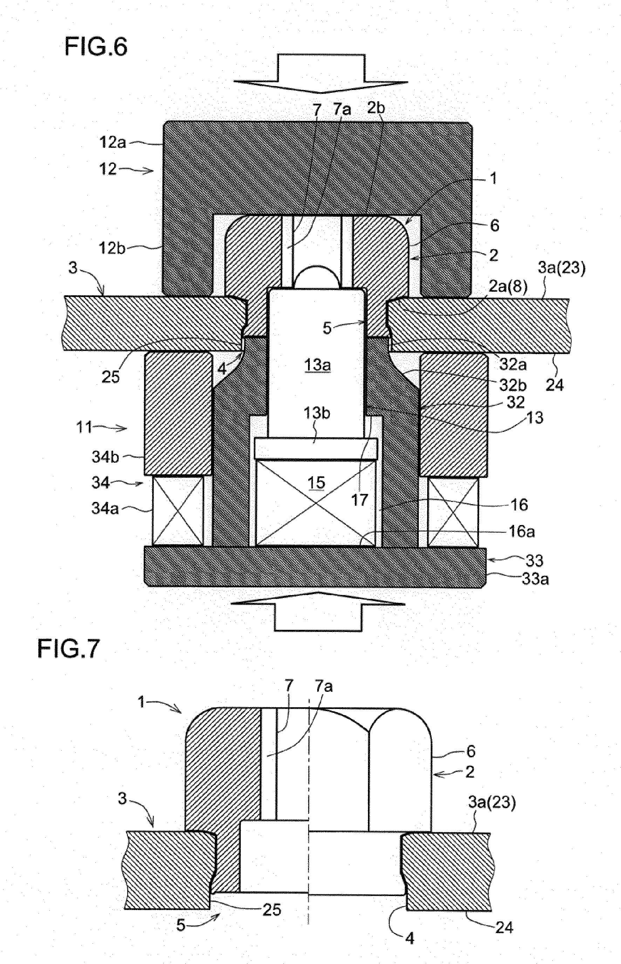

As shown in FIG. 6, for example, if the length of the nut portion 2 is close to the lower limit value within the appropriate range, the pushing portion 32a is inserted into the pilot hole 4. Thereby, the tip of the crimp portion 5 is also pushed into the pilot hole 4. As a result, the crimp portion 5 is firmly crimped to the plate to be attached 3, and occurrence of insufficient torque to resist idling is prevented or restrained.

As described above, since the crimp tool 10 according to the present embodiment includes the pushing portion 32a, the range of the plate thickness t of the plate to be attached 3 to which the crimp nut 1 can be applied is expanded to t = 5 mm to 12 mm, and the range of the length of the crimp portion 5 that is appropriate for the plate thickness dimension of the plate to be attached 3 can be expanded more than that described in Patent Literature 3. Then, the types of crimp nuts used at the time of production can be reduced. As a result, it is possible to prevent the crimp nut 1 having the wrong size with respect to the thickness of the plate to be attached 3 from being used. Further, when the short crimp nut 1 is used, the crimp portion 5 falls within the plate thickness of the plate to be attached 3, so that the crimp portion 5 does not protrude from the plate to be attached 3.

After that, when the crimp side pressing portion 11 comes into contact with the plate to be attached 3 and receives a reaction force equal to or higher than the threshold value from the plate to be attached 3, the driving portion 21 (see FIG. 3) detects this and inverts the drive direction. That is, the crimp force is controlled. By this crimp force control, the driving portion 21 moves the crimp side pressing portion 11 in a direction away from the nut side pressing portion 12. As a result, the crimp nut 1 is separated from the crimp side pressing portion 11 and the nut side pressing portion 12. At this time, since the peeling spring 34a urges the pin 13 in a pulling direction, the pin 13 can be easily pulled out from the crimp portion 5. In the present embodiment, the method of controlling the crimp force for determining the completion of fastening of the crimp nut 1 by the crimp force has been described, but the present invention is not limited to this. Completion of fastening of the crimp nut 1 may be determined by the drive stroke amount of the movable side holding portion 20 by the driving portion 21 (whether or not the movable side holding portion 20 is moved from the origin position to the bottom dead center position) (bottom dead center control).

As shown in FIG. 7, in the crimp nut 1 attached to the plate 3, the crimp portion 5 is crushed in the axial direction and enlarged in diameter so as to be firmly crimped to the inner peripheral surface 25 of the pilot hole 4. Furthermore, diameter of the pilot hole 4 is larger on the fracture surface 24 side than on the shear surface 23 side. Therefore, the crimp portion 5 on the fracture surface 24 side has a larger diameter than the crimp portion 5 on the shear surface 23 side, suitably functions as a stopper for the crimp nut 1, and firmly fixes the crimp nut 1 to the plate 3 by sandwiching a part of the plate 3 with the outer peripheral side end surface 8.

The pilot hole 4 is formed by press working, but is not limited to this. For example, the pilot hole 4 may be formed by drilling or may be formed by another processing method.

Although the embodiments of the present invention have been described in detail above, the present invention can also have the other embodiments as follows.
(1) The tool body 14 may be a small press machine or the like. In this case, it is preferable that the die is attached to the small press machine or the like, and a plurality set of the crimp side pressing portion 11 and the nut side pressing portion 12 are attached to the die with the crimp nut 1 sandwiched therebetween. As a result, a plurality of crimp nuts 1 can be attached with one pressing. Further, the tool body 14 may be a robot equipped with a hydraulic crimp device or the like used for riveting. Further, the tool body 14 has been described in the form of pressing the crimp nut 1 in the vertical direction, but the present invention is not limited to this. The tool body 14 may press the crimp nut 1 in any direction. For example, the tool body 14 may press the crimp nut 1 in the upside-down direction or in the lateral direction from an arbitrary angle.
(2) The peeling mechanism 34 is provided with a peeling spring 34a and a contact portion 34b, but the peeling mechanism 34 is not limited to this. For example, the peeling mechanism 34 may be composed of the peeling spring 34a only.
(3) The nut side pressing portion 12 may be replaced as appropriate according to the height dimension of the nut portion 2. That is, a plurality of nut side pressing portions 12 may be prepared in advance according to the height dimension of the nut portion 2, and may be appropriately selected according to the height dimension of the nut portion 2. As a result, it is possible to deal with a plurality of types of crimp nuts 1 having different heights of the nut portions 2.
(4) It is preferable to use the above-mentioned crimp nut 1 (in which the radius R1 of the outer rounded portion 30 is larger than the radius R2 of the inner rounded portion 31), but the crimp nut 1 is not limited to this. Conditions of the crimp nut 1 that can be used for attaching method for the crimp nut 1 and the crimp tool 10 according to the present embodiment are irrelevant to relation of magnitude of the radius R1 and the radius R2. For example, the crimp nut 1 may be the one described in Patent Literature 3.

The configurations of each of the above embodiments can be combined partially or wholly, unless otherwise inconsistent. The embodiment of the present invention is not limited to the above-described embodiment, and all modifications, applications, and equivalents included in the idea of the present invention defined by the claims are included in the present invention. Therefore, the present invention should not be construed in a limited manner and can be applied to any other technique belonging within the scope of the idea of the present invention.

## Claims

1. An attaching method for attaching a crimp nut to a pilot hole of a plate to be attached, the crimp nut comprising:
a nut portion having a screw hole; and
a cylindrical crimp portion extending in an axial direction from the nut portion,
the attaching method comprising:
a first step of inserting the crimp portion into the pilot hole;
a second step of inserting a pin for preventing deformation into the crimp portion; and
a third step of pressing the nut portion and the crimp portion in the axial direction to compress the crimp portion and pushing a tip of the crimp portion into the pilot hole.

2. A crimp tool for attaching a crimp nut to a pilot hole of a plate to be attached, the crimp nut comprising:
a nut portion having a screw hole; and
a cylindrical crimp portion extending in an axial direction from the nut portion,
the crimp tool comprising:
a crimp side pressing portion to be contacted with a tip of the crimp portion;
a nut side pressing portion to be contacted with an end surface of the nut portion on a side opposite to the crimp portion;
a pin inserted into the crimp portion to regulate radially inward deformation of the crimp portion ; and
a tool body for holding the crimp side pressing portion and the nut side pressing portion in an opposing manner and relatively approaching them to or separating them from each other,
wherein the crimp side pressing portion has a pushing portion that can be inserted into the pilot hole.

3. The crimp tool according to claim 2, wherein the nut side pressing portion includes a high seat portion that is contacted with the plate to be attached.

4. The crimp tool according to claim 2 or 3, wherein the pushing portion is formed in a cylindrical shape.

5. The crimp tool according to claim 4, wherein an outer diameter of the pushing portion is set smaller than an inner diameter of the pilot hole, and
the crimp side pressing portion on a base end side of the pressing portion is formed with a gradual change portion whose diameter increases toward the proximal end side.

6. The crimp tool according to any one of claims 2 to 5, further comprising a peeling mechanism for urging the pin in a direction of pulling out from the crimp portion.
